# EUROPEAN PATENT SPECIFICATION

(11) **EP 3 585 198 B1**
(45) Date of publication and mention of the grant of the patent: **21.07.2021**
(21) Application number: 18710153.0
(22) Date of filing: 23.02.2018
(51) Int. Cl.: A42B 3/18, G02C 3/02

(54) **A SPECTACLE MOUNTING FOR A VISOR ON A HELMET**
BRILLENFASSUNG FÜR EIN VISIER AUF EINEM HELM
MONTURE DE LUNETTES POUR UNE VISIÈRE SUR UN CASQUE

(30) Priority: 24.02.2017 GB 201703016
(43) Date of publication of application: 01.01.2020
(73) Proprietor: LID Vision Limited, Coulsdon, Surrey CR5 1NH (GB)
(72) Inventor: Greene, Andrew, Coulsdon, Surrey CR5 1NH (GB); Greene, Michelle, Coulsdon, Surrey CR5 1NH (GB)
(74) Representative: Walker, Neville Daniel Alan
(86) International application number: PCT/IB2018/051147
(87) International publication number: WO 2018/154507

(56) References cited:
- GB-A- 2 504 323

## Description

### Field of the Invention

The present invention relates to a spectacle mounting for visor on a helmet, more particularly a visor for a helmet that can be arranged with spectacles.

### Background

Many wearers of helmets with visors also wear spectacles. Sometimes it may be difficult to arrange spectacles under the helmet, in particular when the visor is moveable. This can be problematic as it may result in discomfort when worn for long periods of time. Also the helmet and/or visor may prevent the spectacles sitting correctly on a wearer's face which may lead to less optimal vision and discomfort.

Some helmets enable spectacles to be connected to the helmet or fixed on a visor; however devices have limited movement with regards to locating the spectacles.

### Prior Art

A number of patent applications have been filed in an attempt to resolve the problem or similar, including the following:
United States Patent US7798635 (SHINDLER) discloses a method of improving vision when wearing a helmet.

United States Patent US6959989 (HOLM) discloses a connection system for connecting glasses to protective headwear.

French Patent FR2449901 (MINART) discloses a support for an eyeglass frame front having a lug receiving aperture therein, said support having push-button assembly means in one piece moulded construction with the support for mounting the eyeglass frame front on said support.

French Patent Application FR847458 (FILS) discloses a helmet with a means for securing goggles.

International Patent Application WO2011/064537 (CLE EYE CENTRE) discloses a frame for a correction lens that can be attached to a helmet.

German Patent DE10133810 (HARALD) discloses a motorcycle helmet with spectacle support provided by side fittings.

United States Patent US6611959 (LANDO) discloses an eye protector comprising a helmet with slots on either side.

United States Patent US6892393 (PROVOST) discloses an eye shield attachment for use with a safety helmet.

International Patent Application WO2008034486 (LOCATELLI) discloses a crash helmet for with an articulated mechanism for actuating a sun visor.

UK Patent GB2504323 (GREENE) discloses a helmet comprising a visor with an articulated mounting wherein the mounting is prevented from movement by means of a ratchet mechanism.

Korean Utility Model KR20150001745U discloses a safety helmet with protective goggles.

The present invention enables spectacles to be arranged on a mounting that permits the spectacles to remain in position on a user whilst the visor is lifted

### Summary of the Invention

According to the present invention there is provided an articulated mounting for a visor arranged on a helmet comprising: a first arm connected to a second arm by a first pivot; a first end of the first arm is pivotally connected to a second pivot that is adapted to receive a base that attaches to the visor; a second end of the second arm is pivotally connected to a third pivot which has a spectacle connector for supporting spectacles; a resistance means is associated with at least one of the pivots to maintain the spectacles in a chosen orientation supported by the spectacle connector, so that the spectacles remain in a line of sight of a person wearing the helmet when the visor is displaced; and a limiting means is associated with at least one pivot which in use limits a range of rotation of at least one of the pivots. Advantageously the limiting means prevent over rotation at a pivot so that the articulated mounting does not knock against the visor or a wearer during articulation.

The articulated mounting enables spectacles to be easily attached and worn with a helmet having a visor, providing improved comfort to a wearer as well as with corrective vision capability. Once the spectacles are in the desired position movement is prevented during lifting or lowering of the visor on the helmet.

Articulation about the pivots enables the spectacles to be positioned on the wearer's face and to sit on the bridge of the wearer's nose as a normal pair of spectacles would be positioned in use. The articulated mounting articulates within the volume defined by the helmet, the visor and the wearer's head and in particular the wearer's face.

Typically, in use, a pair of articulated mountings is provided mounted on a visor so as to connect at two locations to the visor and to each side of a pair of armless spectacles.

However, it is appreciated that in some embodiments a single mounting may be used on a visor to hold a pair of spectacles or to support a single lens.

In this way the user may mount prescription lenses/spectacles and/or tinted lenses/sunglasses onto the articulated mounting arranged on the visor of the helmet. This arrangement means that the wearer is not required to use his or her own spectacles with arms that extend along the side of the wearer's head.

Preferably corresponding armless spectacles are provided to engage with the articulated mounting. In this way a spectacle wearer, such as a motorcyclist will purchase spectacles that are adapted to connect with the spectacle connectors of the articulated mounting. Advantageously such spectacles are also adapted to receive arms so that the spectacles are suitable for wearing in conjunction with the helmet or as their normal pair of spectacles.

The articulated mounting may be for use on any helmet with a visor. Preferably the articulated mounting is for use with a motorcycle helmet with a visor. However, the articulated mountings may also be used of other helmets with visors to include, but not limited to a welding helmet, cycle helmet, construction site helmet, pilot helmet, ski or snowboarding helmet, surgeon helmet or laboratory helmet.

Preferably the second pivot comprises a ball and socket joint to permit the base to fit any visor. This enables the articulated mounting to be arranged to permit functioning of the pivots whilst the base is fixed to the visor. The base can be tilted and rotated to match the visor whilst allowing the arms of the articulated mounting to articulate, for example to extend towards the wearer's face.

In this way as the visor is lifted the arms articulate/rotate in either an anticlockwise or clockwise direction, depending on fitting about the pivots so as to maintain the spectacles in position.

Typically the base includes a ball which is accepted to a socket provided on the first end of the first arm.

In an alternative embodiment the base includes a socket accepted by a ball arranged on a first end of the first arm.

The base may include an adhesive pad for securing the base to the visor.

Advantageously this enables the base to be retrofitted to a visor.

In some embodiments the base may provide a temporary attachment means such as a suction cup, clip, or removable or reusable adhesive so that the base can be easily removed.

It is appreciated that the base may be separable from the articulated mounting so that it can be first arranged on a visor and then secondly attached to the arms.

The base may be arcuate so as to correspond to the curvature of a visor or may be resiliently deformable so as to be shaped to match the curvature of a visor. In this way the base can be connected more securely to the visor.

In some embodiments the base may be connected to a visor at manufacture or integrated with the visor at manufacture.

A template may be provided with a visor to ensure the base of the articulated mounting is arranged at the correct position to ensure the spectacles remain stationary as the visor is moved.

Typically the base is fixed to a region of the visor that is below eye height when the visor is positioned over a wearer's eyes. This assists with maintaining position of the spectacles as the visor is moved.

Preferably the resistance means includes or comprises tensioning means so that at least one of the pivots acts under tension to permit articulation of the mounting in such a way that spectacles remain in place as the visor is moved.

In a preferred embodiment the resistance means comprises a cable system (tensioning means) typically having a pair of cables. At least one cable is arranged between the first arm and second arm, passing around the first pivot in such a way that the cables are configured so that movement of the first pivot causes movement of the cables.

The cables are arranged so as to be maintained under a constant tension. This assists with smooth and continuous movement.

In some embodiments the cables are formed from an elastic material such as an elastomer so that the cable can be arranged under tension.

In another embodiment the cable may not be elastic and instead each cable is associated with an elastic portion such as a compression spring or including an elastic part in order to permit the cable to be maintained under tension and to enable smooth movement of the mechanism.

In a preferred embodiment each cable end is secured so as to run in substantially the same axis as the arm or arms with which it associates.

In a preferred arrangement a first cable is arranged between the first and second arms with a first end of the first cable secured on the first arm and a second end of the first cable secured on the second arm. The cable passes about the first pivot and is maintained under tension.

Preferably the first pivot has a tensioner in the form of a projection that extends from the first pivot so as to contact the first cable when the pivot is in certain positions. The tensioner is arranged to ensure the cable remain under constant tension in configurations in which the cable may otherwise become slack.

Preferably a second cable is provided between a pulley at a second end of the second arm and a mid region of the second arm, a mid region being between the first and second end of the second arm. In this way movement about the third pivot, due to movement of the spectacle mount, is also made under tension.

Typically the cables have end stops that are arranged in recesses in the arms in order to be secured and held in position during use.

The cables may be elastic to help maintain tension or the cables may include an elastic portion. By maintaining the cables under constant tension smooth movement during articulation is permitted.

It is appreciated that in some embodiments the resistance means may comprise only one cable or three or more cables.

In an alternative embodiment the resistance means may comprise at least one of the pivots including a torsion spring. The torsion spring biases the range of movement at the pivot to ensure the arms fold and unfold in a preferred way.

Ideally a torsion spring is provided on at least one pivot to assist with maintaining spectacles, supported by the spectacle connector, in an orientation so that the spectacles remain worn by a person wearing the helmet whilst the visor is displaced.

In some embodiments the resistance means may include a cable system and a torsion spring.

In a preferred embodiment the first and third pivots include torsion springs, therefore the articulated mounting has two torsion springs.

Each pivot is configured such that the resistance between the parts prevents movement at the pivot unless a force is applied. In this way once spectacles are correctly orientated on a wearer they do not move unless adjusted by the wearer applying a force to reposition the spectacles.

In some embodiments an element of the resistance between the parts is created by friction between the parts.

The pivots include limiting means such as stoppers to limit the range of movement at the pivots. This ensures that pivot angles do not extend beyond a defined limit.

Advantageously the stoppers prevent undesirable articulation, for example, so as to ensure the spectacles remain in position whilst the visor is lifted or lowered by defining an end point at which articulation is prevented and to ensure the spectacle do not come into contact with the visor.

Preferably at least the first pivot and typically the first and third pivot include a stopper to limit range of movement of the pivot.

The spectacles may be added to and removed from the articulated mounting.

Preferably the articulated mounted is adapted to receive armless spectacles. In this way the discomfort associated with spectacle arms being pushed against a wearer's head by the helmet are removed.

It is appreciated that standard spectacles may be adapted to be received by the articulated mounting, or that specialist armless spectacles may be provided for use with the articulated mounting(s).

The spectacle connector is adapted to receive the spectacles. For example the connector may connect to the spectacles by clips, snap fittings or mating parts that permit connection.

Ideally the spectacles are removably attached to the spectacle connector so that they can be removed when not in use. For example so that the spectacles can be cleaned or worn as normal spectacles once arms are added, or exchanged for an equivalent prescription sunglasses.

The base, arms and spectacle connector may be formed by the process of injection moulding. In another embodiment the before mentioned parts may be moulded or cut from a template.

Typically the articulated mounting is formed from strong, lightweight, durable materials suitable for repeated use. For example the base, arms and spectacle connector may be formed from synthetic plastic.

Preferred embodiments of the invention will now be described, by way of example only, and with reference to the Figures in which:

### Brief Description of Figures

Figures 1 shows an inside, side view of a first embodiment of the mounting;
Figure 2 shows an end view of the first embodiment of the mounting;
Figure 3 shows an isometric view of the first embodiment of the mounting;
Figure 4 shows an isometric view of the first embodiment of the mounting;
Figure 5 shows and outside, side view of the first embodiment of the mounting;
Figure 6 shows an exploded view of the first embodiment of the mounting;
Figure 7 shows a side view of a second embodiment of the mounting having at least one spring associated with the cables;
Figures 8A shows a partially exploded view of a third embodiment of pair of articulated mountings connected to a pair of spectacles;
Figure 8B shows exploded views of the third embodiment of the articulating mountings;
Figure 8C shows a front view of the third embodiment of a pair of articulated mountings connected to a pair of spectacles;
Figure 9A shows a base with a ball joint;
Figure 9B shows a side view of a base with a ball joint;
Figures 10A to 10F show various views of a first arm of the third embodiment of the;
Figures 11A to 11F show various views of a second arm of the third embodiment of the;
Figures 12A to 12C show various views of a cover;
Figures 13A to 13E show various views of a spectacle connector;
Figures 14A to 14D show various views of a pair of articulated mountings arranged on a visor of a motorcycle helmet;
Figures 15A to 15F show various views of armless spectacles;
Figure 16 shows an exploded view of spectacles with displaceable arms;
Figures 17A to 17D disclose various views of the articulated mounting connected to spectacles; and
Figures 18A to 18D show various views of the spectacles with detachable arms.

### Detailed Description of Figures

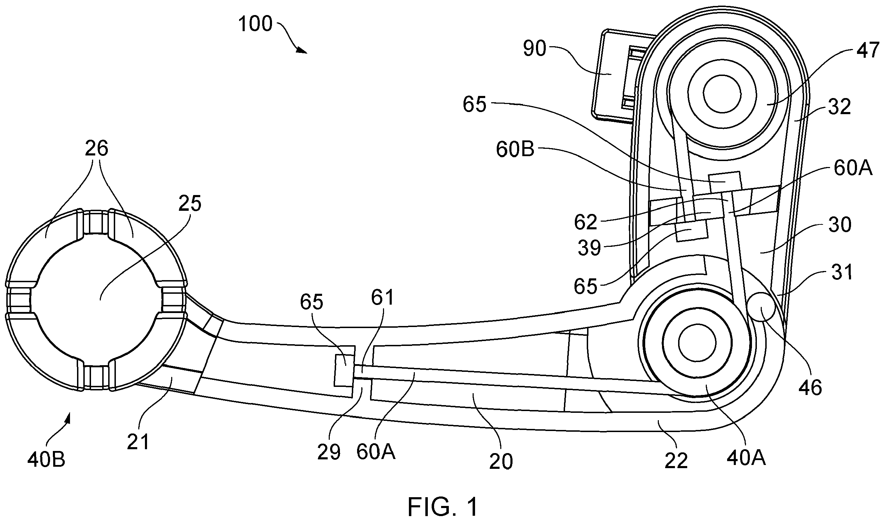

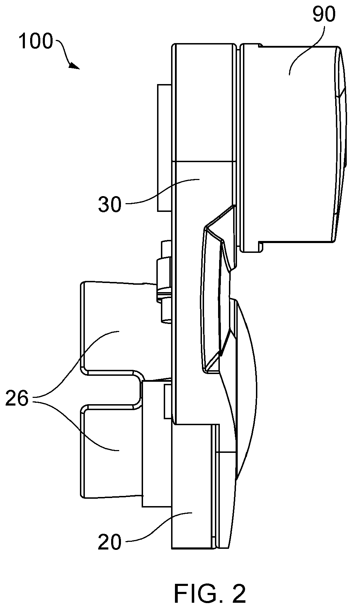

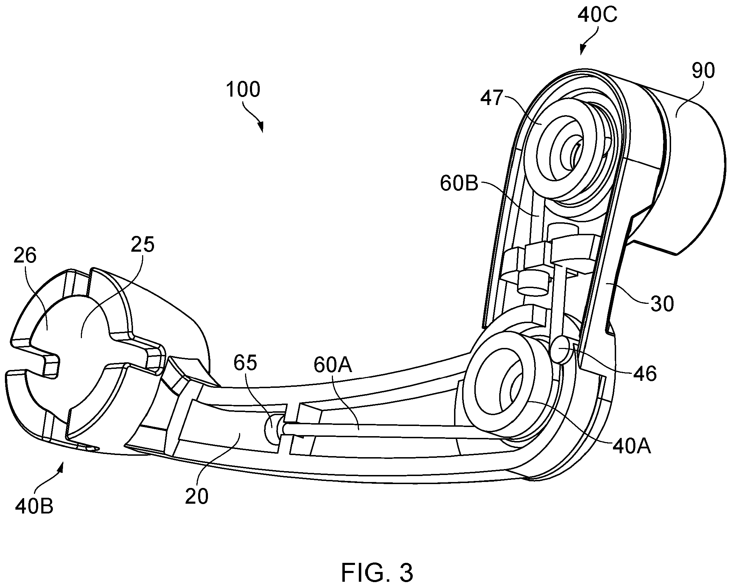

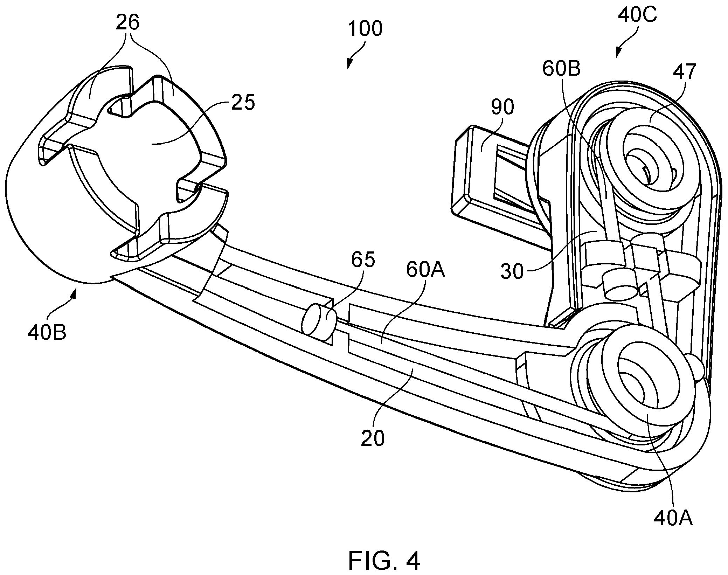

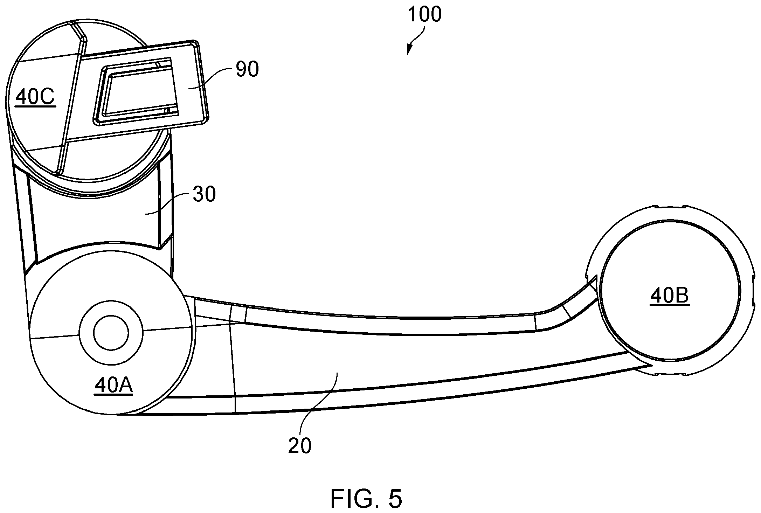

Figures 1 to 6 show a preferred embodiment of the mounting 100 using a cable system to enable smooth, reliable movement of the mounting.

The mounting 100 has a first arm 20 and a second arm 30 joined at a first pivot 40A.

A first end 21 of the first arm 20 is a socket 25 for receiving a base that attached to a visor (not shown). The connection of the base to the socket defines a second pivot 40B.

The first arm 20 is elongate with rounded ends that form the pivots 40A, 40B.

The socket 25 is a cavity defined by a plurality of fingers 26 that project from the first arm 20. The fingers 26 are arranged to correspond to a ball joint (not shown in Figures 1 to 6) provided on the base 10 (not shown in Figures 1 to 6).

The second end 22 of the first arm 20 and a first end 31 of a second arm 30 are pivotally connected so that the arms 20, 30 can rotate about the pivot 40A.

The second end 32 of the second arm 30 is connected to a spectacle connector 90 at a third pivot 40C.

The resistance means of the first embodiment is provided by a cable system.

A first cable 60A is arranged between the first and second arms 20, 30 passing around the first pivot 40A.

The first cable 60A has end stops 65 for locating the cable ends 61, 62 on the arms 20, 30 of the mounting. The arms 20, 30 have a recess 29, 39 for receiving the end stops 65.

The arms 20 and 30 are shaped so as to define a pathway through which the cables 60A and 60B pass.

The first pivot 40A is also shaped to guide the first cable 60A about the pivot 40A and to the second arm 30. The first pivot 40A has a tensioner 46 in the form of a projection that serves to keep the cable under tension when in contact with the first cable 60A.

The second arm 30 is also shaped to guide the first cable 60A to the third pivot 40C.

The third pivot 40C has a pulley 47 about which a second cable 60B runs. The second cable 60B runs between the second arm 30 and the pulley 47.

The second cable 60B passes around and is secured to the pulley 47. The first end of the second cable 60B has an end stop 65 that is secured in recess 35 provided on the second arm 30.

The first and second arms 20, 30 interlock with one another to permit pivoting of the arms 20, 30. The second ends 22 of the first arm 20 and the first end 31 of the second arm 30 are shaped to engage with each other to permit pivoting and so as to limit range of motion about the first pivot 40A.

The second arm 30 is shaped to define a barrier that prevents the pivot 40A from opening beyond a predetermined range.

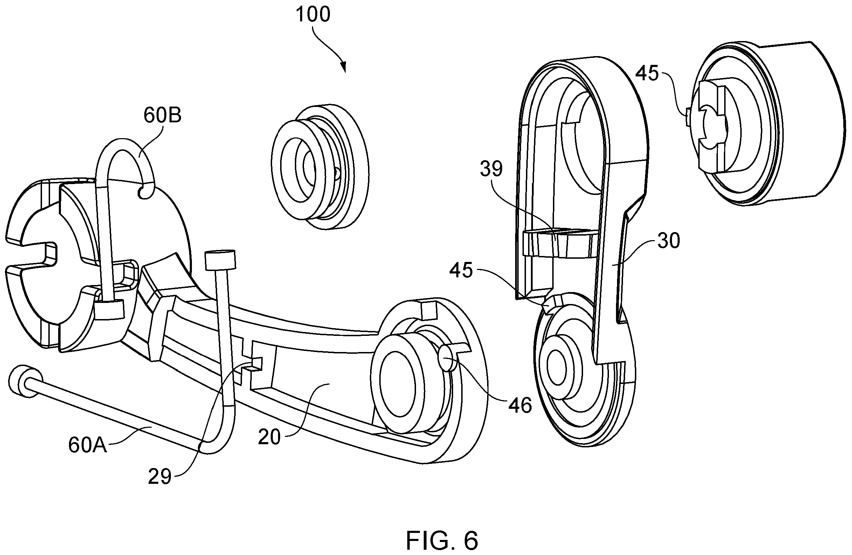

In addition to this the second arm 30 includes a first stopper 45 at the pivot 40A that limits rotation (See Figure 6). Preferably rotation about the first pivot 40A is limited to 75 degrees by the stopper 45.

By controlling the range of rotation at the pivots the mounting is adapted to articulate within the space between the visor and a wearer's face.

The third pivot 40C has a second stopper 45 (see Figure 6) which engages with the second arm 30 so as to restrict range of movement. Ideally the range of movement is restricted to 115 degrees.

The stoppers are limiting means that prevent over rotation at the pivots and ensure that the mounting articulates within the area between the visor, helmet and a wearer's face.

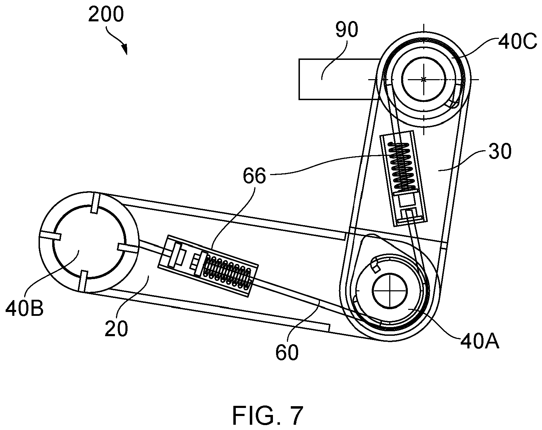

Figure 7 shows a side view of a second embodiment of the mounting 200 having a cable system in which the cable 60 includes a spring 66 so as to provide elasticity to the cable. This enables non elastic cable to be used.

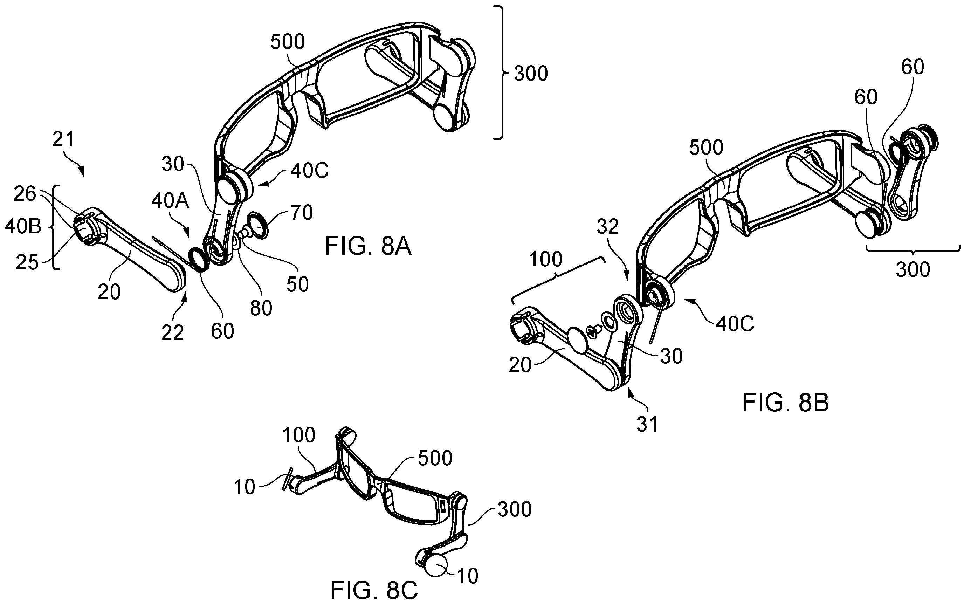

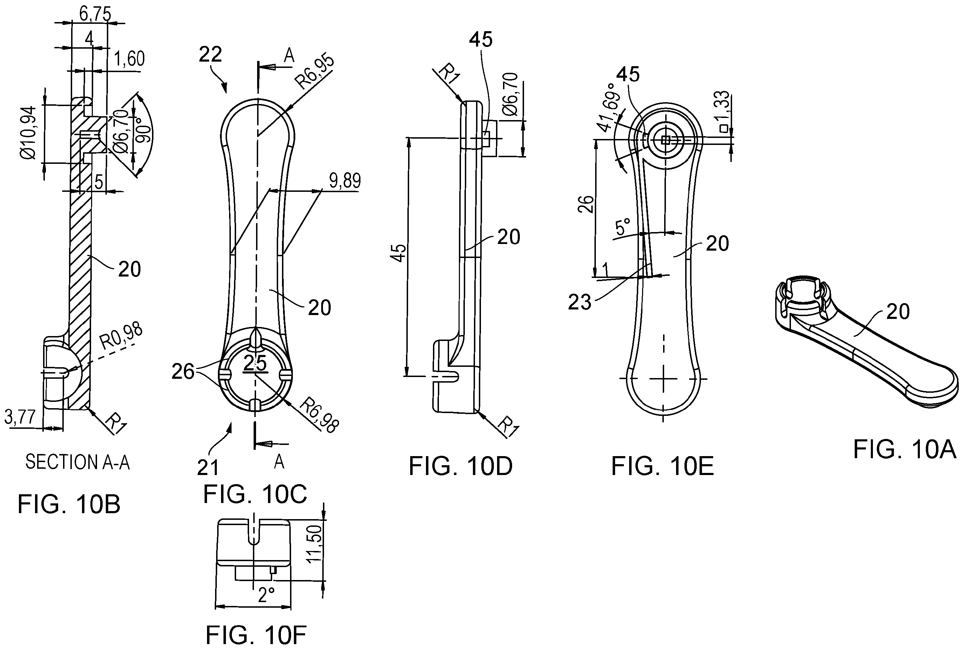

Figures 8 to 18 show a third embodiment of the invention.

An overview of the articulated mounting 300 is shown in Figures 8A to 8C. A pair of articulated mountings 100 are arranged to connect to either side of a pair of spectacles 200.

The articulated mounting 300 has a base 10 (shown in Figure 8C), the base 10 connects to a socket 25 to define a second pivot 40B. The socket 25 is provided at a first end 21 on the first arm 20.

The first arm 20 is elongate with rounded ends 21, 22.

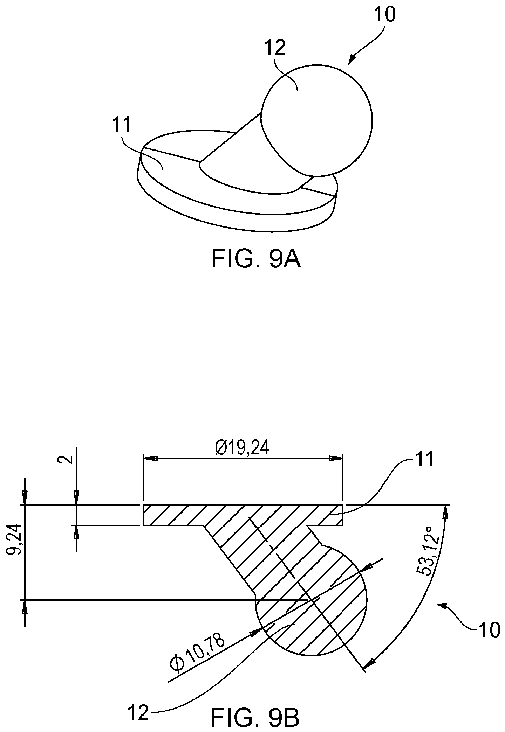

The socket 25 is a cavity defined by a plurality of fingers 26 that project from the first arm 20. The fingers 26 are arranged to correspond to a ball joint 12 (See Figures 9A and 9B) provided on the base 10.

The second end 22 of the first arm 20 is pivotally connected to the second arm 30 at a first pivot 40A by a tapping screw 50. The second end 22 of the first arm 20 and a first end 31 of a second arm 30 are pivotally connected so that the arms 20, 30 can rotate about the pivot 40A.

The tapping screw 50 is covered by a cover 70. A washer 80 is arranged between the tapping screw 50 and the second arm 30.

The pivot 40A includes a torsion spring 60. The torsion spring maintains a preferred angle of the first arm 20 relative to the second arm 30, until a force is applied to overcome the spring 60.

The torsion spring 60 is arranged between an inner face of the first arm 20 and an outer face of the second arm 30.

The second end 32 of the second arm 30 is connected to a spectacle connector 90 at a third pivot 40C.

The spectacle connector 90 and the second end 32 of the second arm 30 are connected by a tapping screw 50 with a washer 80 separating the tapping screw 50 from connecting with the second arm 30.

The third pivot 40C includes a torsion spring 60.

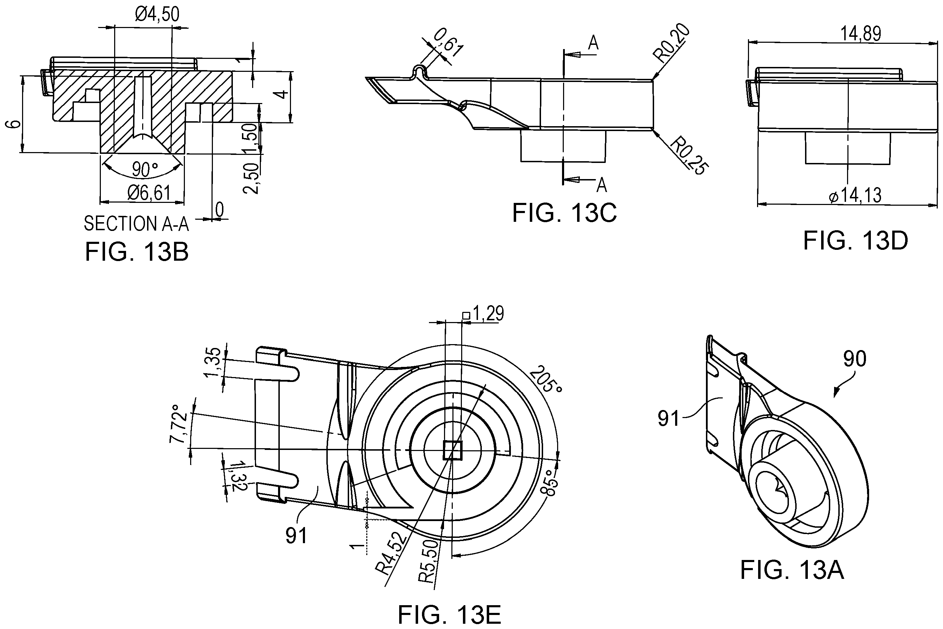

The spectacle connector 90 has a receiving portion for connecting to the spectacles as shown in Figures 13A to 13E.

Figures 8A and 8B show the base 10, having a disc shaped portion 11 that is adhered to the visor and a ball joint 12. This arrangement permits the base to pivot relative to the orientation of the arms 20, 30 so that the base can be connected to a visor and the arms are free to articulate.

The disc shaped portion 11 is 19.24mm wide and 2mm thick. The ball 12 is arranged at an angle of 53.12 degrees relative to the disc shaped portion 11.

Figures 9A to 9F show various views and preferred dimensions of the first arm 20.

The socket 25 located at the first end 21 has four fingers 26. The ball joint 12 of the base 10 can be push fitted into the socket 25 in order to form the pivot 40A.

An inner face of the first arm 20 has a recess 23 for receiving the spring. The recess 23 ensures the spring is fixed in position.

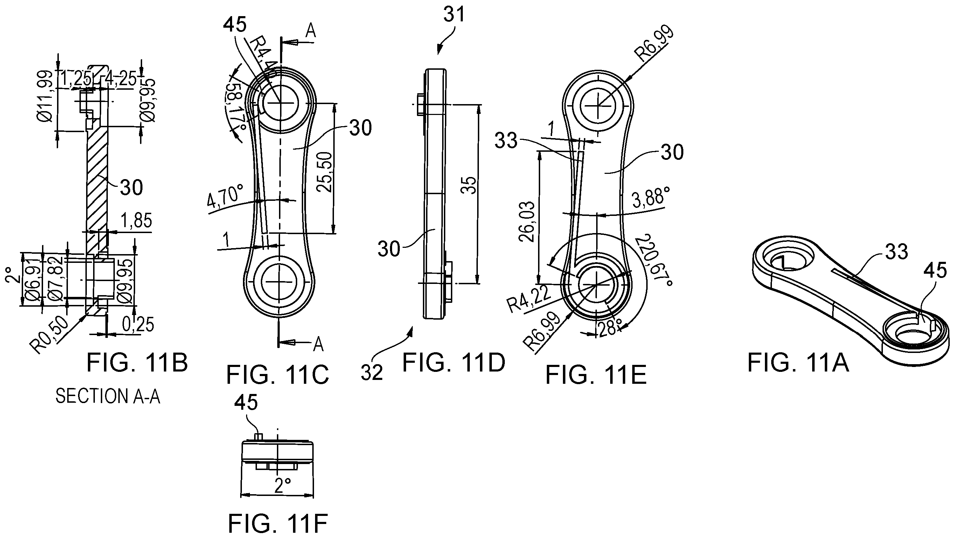

Figures 11A to 11F show various views of the second arm 30. The first end 31 of the second arm 30 is adapted to correspond to the second end 22 of the first arm 20 so that the ends 31 and 22 are pivotally connected to form the first pivot 40A.

The second end 32 of the second arm 30 is adapted to correspond to the spectacle connector 90 (not shown in Figures 11A to 11F) form the third pivot 40C.

The second arm 30 has recesses 33 provided on both sides to accommodate one spring 60 associated with the first pivot 40A and a second spring 60 associate with the third pivot 40C.

The second arm 30 includes a stopper 45 to limit range of rotation at the pivots.

The first and second arms 20, 30 each have substantially the same overall shape, being elongate with bulbous ends 21, 22, 31, 32.

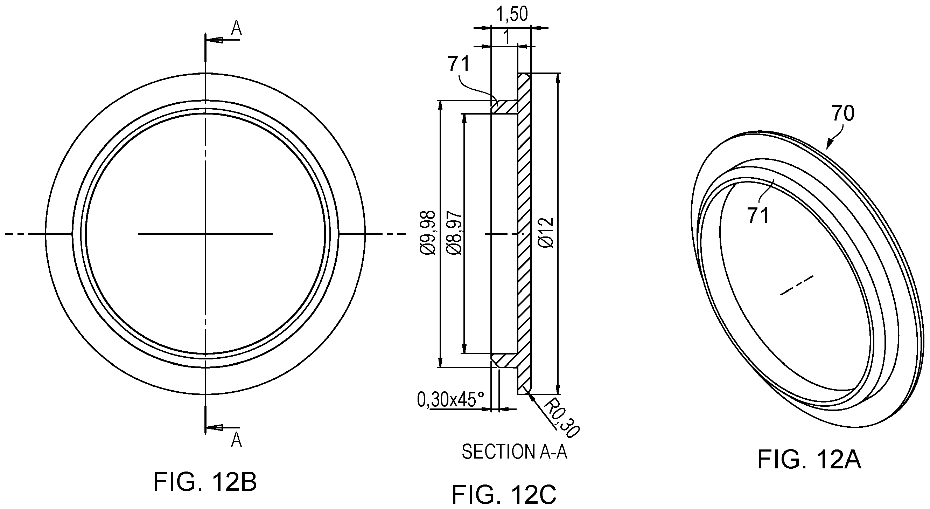

Figures 12A to 12C show a cover 70 that is arranged over the tapping screw 50. The cover 70 has a rim 71 that is received by the arms 20, 30 in order to secure the cover to the articulated mounting and to provide a smooth outer finish.

Figures 13A to 13E show various views of the spectacle connector 90. The spectacle connector 90 is connected to the second end 32 of the second arm 30. The spectacle connector 90 has an attachment means 91 that is adapted to receive the spectacles 200 (not shown in Figures 13A to 13E).

The attachment means 91 includes a projection that is inserted through an opening 201 provided on the spectacles 200. This enables the armless spectacles 200 to be removably connected to the articulated mounting 100 by means of the attachment means 91 on the spectacle connector 90.

Figures 13B to 13E include details of preferred dimensions.

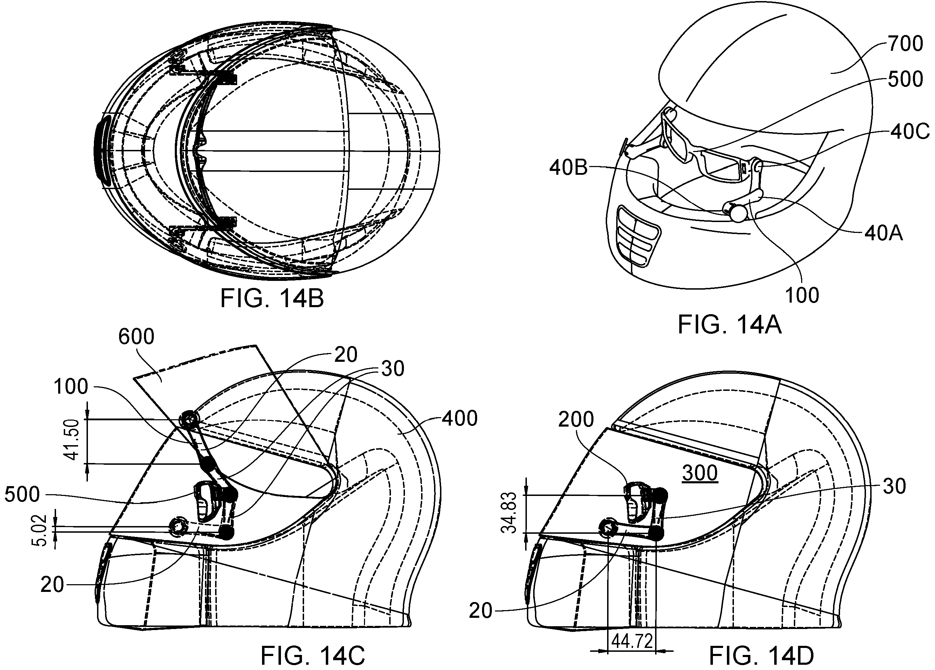

Figures 14A to 14D show the articulated mounting 100 arranged on a visor 600 or a helmet 700.

Figure 13C outlines two orientations of the articulated mounting 100, 200, 300. A first arrangement wherein the first and second arms are substantially a right angles to one another and wherein the visor 600 is closed. A second orientation wherein the first arm 20 and second arm 30 form a substantially straight line, such that the visor 600 is in the open position whilst the spectacles remain on the wearer's face.

The first and third pivots 40A and 40C include stoppers 45 that limit rotation about the pivots 40A, 40C to a predefined value or limit that is defined by a stopper. These stoppers also assist to prevent the spectacles moving when the visor is lifted or lowered by defining a point at which the pivot is arrested or limited from further movement. In this sense therefore the stoppers perform two functions: firstly to limit the range of movement of the pivot; and secondly to arrest movement of the spectacles.

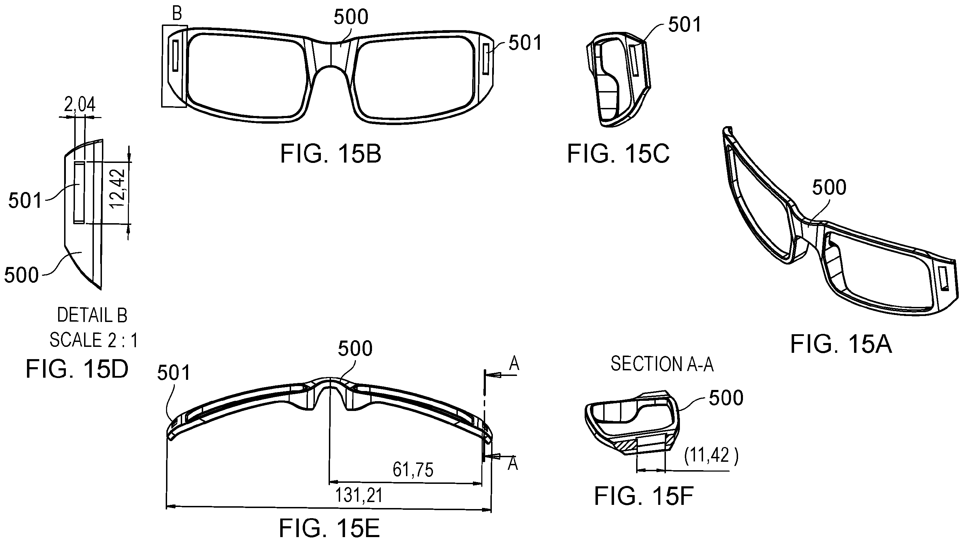

Figures 15A to 15F show various views of armless spectacles 500. The spectacles 500 have an opening 501 for receiving the spectacle connector 70.

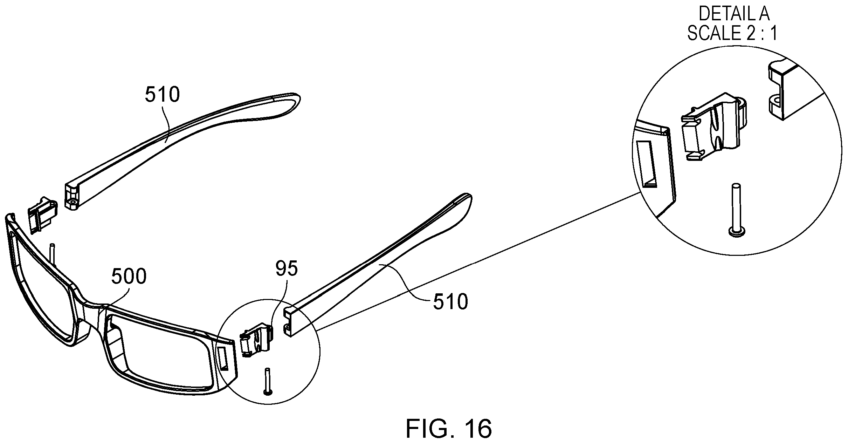

Figure 16 shows an option to connect spectacle arms 510 to the armless spectacles 500 so that the spectacles can be worn as normal glasses when the helmet is removed. In this embodiment the spectacle connector 90 has a hinge 95 for connecting to a spectacle arm 510.

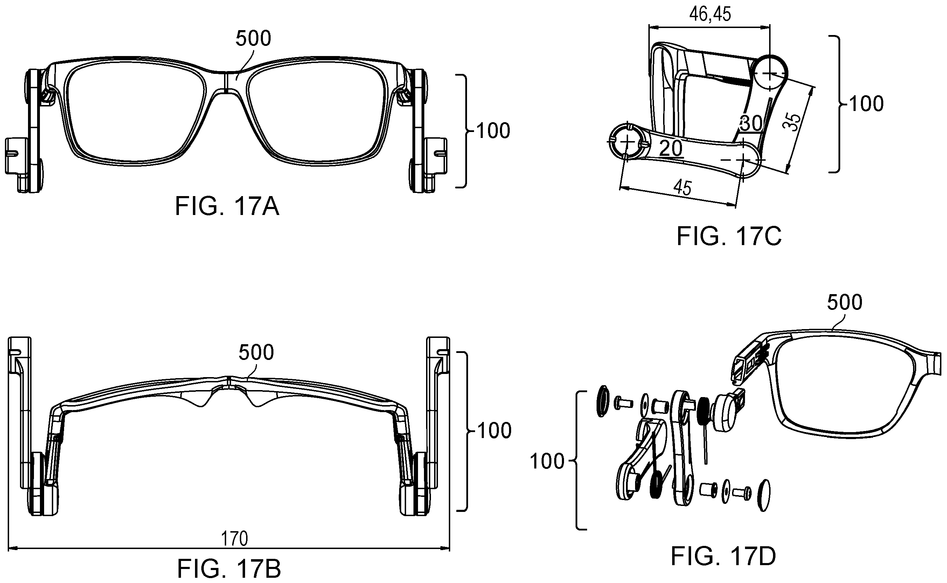

Figures 17A to 17D disclose various views of the articulated mounting 100 attached to spectacles 200. Figure 16C shows the arrangement of the arms: 20, 30 when the glasses are worn by the wearer.

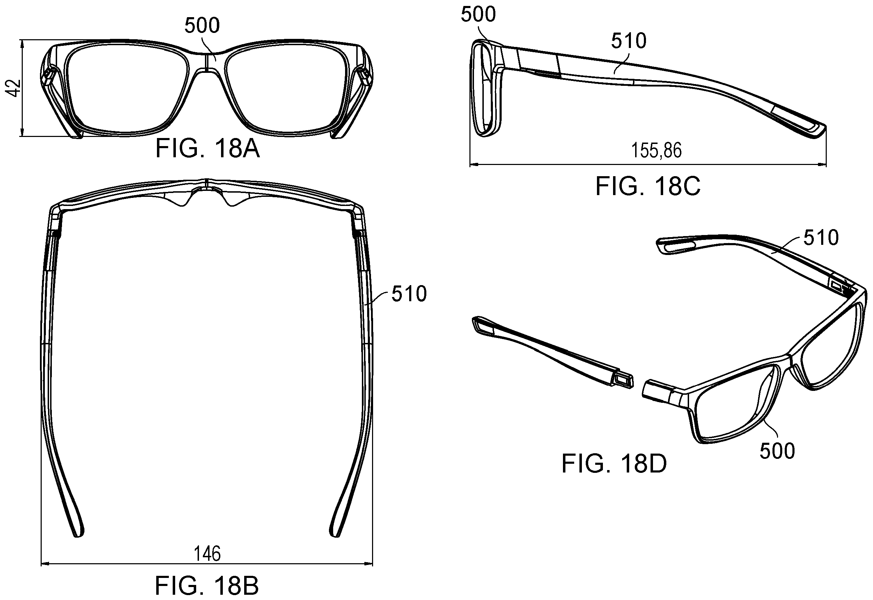

Figures 18A to 18D show various views of the spectacles 500 with detachable arms 510, such that the arms 510 can be removed to provide an armless spectacle 500 suitable for connecting to the articulated mounting 100.

The invention has been described, by way of examples only, and it is understood that variation may be made to the embodiments described without departing from the scope of the invention as defined by the claims.

## Claims

1. An articulated mounting (100) for a helmet (700) with a visor (600) comprises: a first arm (20) connected to a second arm (30) by a first pivot (40A); a first end (21) of the first arm is pivotally connected to a second pivot (40B) that is adapted to receive a base (10) that attaches to the visor; a second end (32) of the second arm is pivotally connected to a third pivot (40C) which has a spectacle connector (90) for supporting spectacles (500); **characterised in that** a resistance means (60) is associated with at least one of the pivots to maintain the spectacles in a chosen orientation supported by the spectacle connector, so that the spectacles remain in a line of sight of a person wearing the helmet when the visor is displaced; and a limiting means (45) is associated with at least one pivot which in use limits a range of rotation of at least one of the pivots.

2. An articulated mounting according to claim 1 wherein the resistance means comprises a tensioning means.

3. An articulated mounting according to claim 2 wherein the tensioning means includes at least one elastic cable.

4. An articulated mounting according to claim 2 wherein the tensioning means includes at least one cable and an elasticated means.

5. An articulated mounting according to any preceding claim wherein the resistance means includes a torsion spring (60).

6. An articulated mounting according to claim 5 wherein the first pivot (40A) includes a torsion spring (60).

7. An articulated mounting according to claim 5 wherein the third pivot (40C) includes a torsion spring (60).

8. An articulated mounting according to any preceding claim wherein the first arm (20) and the second arm (30) include a recess (23) for receiving the resistance means.

9. An articulated mounting according to any preceding claim wherein the second pivot (40B) has a socket (25) adapted to receive a ball joint (12).

10. An articulated mounting according to any preceding claim wherein the limiting means comprise at least one stopper provided on at least one pivot to limit range of movement at the pivot.

11. An articulated mounting according to any preceding claim including a base (10).

12. An articulated mounting according to claim 11 wherein the base (10) includes an adhesive pad for securing the base to the visor (600).

13. An articulated mounting according to claim 11 or claim 12 wherein the base (10) is arcuate.

14. A visor (600) including an articulating mounting (100) according to any of claims 1 to 13.

15. A helmet (700) including an articulating mounting (100) according to any of claims 1 to 13.

## Patentansprüche

1. Mit Gelenken versehene Halterung (100) für einen Helm (700) mit einem Visier (600), umfassend: einen ersten Arm (20), der durch ein erstes Drehgelenk (40A) mit einem zweiten Arm (30) verbunden ist; wobei ein erstes Ende (21) des ersten Arms drehbar mit einem zweiten Drehgelenk (40B) verbunden ist, das dazu eingerichtet ist, eine Basis (10) aufzunehmen, die sich an das Visier anfügt; ein zweites Ende (32) des zweiten Arms drehbar mit einem dritten Drehgelenk (40C) verbunden ist, das einen Brillenverbinder (90) zum Stützen einer Brille (500) aufweist; **dadurch gekennzeichnet, dass** ein Zurückhaltungsmittel (60) mit mindestens einem der Drehgelenke assoziiert ist, um die Brille in einer gewählten Ausrichtung, gestützt von dem Brillenverbinder, zu halten, so dass die Brille in einer Sichtlinie einer Person, die den Helm trägt, bleibt, wenn das Visier verschoben wird; und ein Begrenzungsmittel (45) mit mindestens einem Drehgelenk assoziiert ist, das im Gebrauch einen Rotationsbereich von mindestens einem der Drehgelenke begrenzt.

2. Mit Gelenken versehene Halterung nach Anspruch 1, wobei das Zurückhaltungsmittel ein Spannmittel umfasst.

3. Mit Gelenken versehene Halterung nach Anspruch 2, wobei das Spannmittel mindestens ein elastisches Kabel beinhaltet.

4. Mit Gelenken versehene Halterung nach Anspruch 2, wobei das Spannmittel mindestens ein Kabel und ein Gummizugmittel beinhaltet.

5. Mit Gelenken versehene Halterung nach einem vorhergehenden Anspruch, wobei das Zurückhaltungsmittel eine Torsionsfeder (60) beinhaltet.

6. Mit Gelenken versehene Halterung nach Anspruch 5, wobei das erste Drehgelenk (40A) eine Torsionsfeder (60) beinhaltet.

7. Mit Gelenken versehene Halterung nach Anspruch 5, wobei das dritte Drehgelenk (40C) eine Torsionsfeder (60) beinhaltet.

8. Mit Gelenken versehene Halterung nach einem vorhergehenden Anspruch, wobei der erste Arm (20) und der zweite Arm (30) eine Aussparung (23) zum Aufnehmen des Zurückhaltungsmittels beinhalten.

9. Mit Gelenken versehene Halterung nach einem vorhergehenden Anspruch, wobei das zweite Drehgelenk (40B) eine Buchse (25) aufweist, die dazu eingerichtet ist, ein Kugelgelenk (12) aufzunehmen.

10. Mit Gelenken versehene Halterung nach einem vorhergehenden Anspruch, wobei die Begrenzungsmittel mindestens einen Anschlag umfassen, der an mindestens einem Drehgelenk vorgesehen ist, um einen Bewegungsbereich an dem Drehgelenk zu begrenzen.

11. Mit Gelenken versehene Halterung nach einem vorhergehenden Anspruch, beinhaltend eine Basis (10).

12. Mit Gelenken versehene Halterung nach Anspruch 11, wobei die Basis (10) ein Klebepad zum Sichern der Basis an dem Visier (600) beinhaltet.

13. Mit Gelenken versehene Halterung nach Anspruch 11 oder 12, wobei die Basis (10) gebogen ist.

14. Visier (600), beinhaltend eine mit Gelenken versehene Halterung (100) nach einem der Ansprüche 1 bis 13.

15. Helm (700), beinhaltend eine mit Gelenken versehene Halterung (100) nach einem der Ansprüche 1 bis 13.

## Revendications

1. Une monture articulée (100) pour un casque (700) avec une visière (600) comprend : un premier bras (20) relié à un deuxième bras (30) par un premier pivot (40A) ; une première extrémité (21) du premier bras est reliée de façon pivotante à un deuxième pivot (40B) qui est adapté pour recevoir une base (10) qui est fixée à la visière ; une deuxième extrémité (32) du deuxième bras est reliée de façon pivotante à un troisième pivot (40C) qui a une fixation de lunettes (90) pour soutenir des lunettes (500) ; **caractérisé en ce qu'**un moyen de résistance (60) est associé au moins à un des pivots pour maintenir les lunettes dans une orientation souhaitée, soutenues par la fixation de lunettes, de telle sorte que les lunettes restent dans une ligne de vision d'une personne portant le casque lorsque la visière est déplacée ; et un moyen de limitation (45) est associé à moins un des pivots qui, lors de l'utilisation, limite la plage de rotation d'au moins un des pivots.

2. Une monture articulée selon la revendication 1, dans laquelle le moyen de résistance comprend un moyen de mise en tension.

3. Une monture articulée selon la revendication 2, dans laquelle le moyen de mise en tension inclut au moins un câble élastique.

4. Une monture articulée selon la revendication 2, dans laquelle le moyen de mise en tension inclut au moins un câble et un moyen élastique.

5. Une monture articulée selon l'une quelconque des revendications précédentes, dans laquelle le moyen de résistance inclut un ressort de torsion (60).

6. Une monture articulée selon la revendication 5, dans laquelle le premier pivot (40A) inclut un ressort de torsion (60).

7. Une monture articulée selon la revendication 5, dans laquelle le troisième pivot (40C) inclut un ressort de torsion (60).

8. Une monture articulée selon l'une quelconque des revendications précédentes, dans laquelle le premier bras (20) et le deuxième bras (30) incluent une cavité (23) pour recevoir le moyen de résistance.

9. Une monture articulée selon l'une quelconque des revendications précédentes, dans laquelle le deuxième pivot (40B) a un logement (25) adapté pour recevoir une rotule (12).

10. Une monture articulée selon l'une quelconque des revendications précédentes, dans laquelle le moyen de limitation comprend au moins une butée fournie sur au moins un des pivots pour limiter la plage de mouvement au niveau du pivot.

11. Une monture articulée selon l'une quelconque des revendications précédentes, incluant une base (10).

12. Une monture articulée selon la revendication 11, dans laquelle la base (10) inclut un tampon adhésif pour fixer la base à la visière (600).

13. Une monture articulée selon la revendication 11 ou la revendication 12, dans laquelle la base (10) est incurvée.

14. Une visière incluant une monture articulée (100) selon l'une quelconque des revendications 1 à 13.

15. Un casque (700) incluant une monture articulée (100) selon l'une quelconque des revendications 1 à 13.
